# EUROPÄISCHE PATENTSCHRIFT

(11) **EP 2 056 430 B1**
(45) Veröffentlichungstag und Bekanntmachung des Hinweises auf die Patenterteilung: **20.09.2017**
(21) Anmeldenummer: 08017877.5
(22) Anmeldetag: 13.10.2008
(51) Int. Cl.: H02K 7/06, H02K 7/08, F16D 23/12, F16H 25/20, F16H 25/22

(54) **Motor-Getriebemodul**
Motor gearbox module
Module d'entraînement de moteur

(30) Priorität: 29.10.2007 DE 102007051515
(43) Veröffentlichungstag der Anmeldung: 06.05.2009
(73) Patentinhaber: Schaeffler Technologies AG & Co. KG, 91074 Herzogenaurach (DE)
(72) Erfinder: Gramann, Matthias, 77871 Renchen (DE); Friedmann, Oswald, 77839 Lichtenau (DE); Mán, Lászlo Dr., 77833 Ottersweier-Unzhurst (DE); Burkhart, Dirk, 76889 Klingenmünster (DE)

(56) Entgegenhaltungen:
- EP-A2- 2 051 353
- WO-A1-2006/114265
- JP-A- H08 159 231

## Beschreibung

Die vorliegende Erfindung betrifft ein Motor-Getriebemodul zum Antrieb eines Hebelsystems mit den Merkmalen des Oberbegriffs des Anspruchs 1.

Bei konventionellen Hebelaktoren, wie in der DE 10 2004 009 832 beschrieben, dient als Antriebselement der Motoreinheit vorzugsweise ein EC-Motor. Sowohl dieser als auch die mittels eines Verbindungselements an ihn gekoppelte Getriebeeinheit bilden hierbei in sich geschlossene Module mit jeweils separater Lagerung.

Weiterhin ist bekannt, die Motoreinheit und die Getriebeeinheit als steckbares Modul mit einer gemeinsamen Spindelwelle auszuführen. Bei dieser Lösung hat sowohl die Motoreinheit als auch die Getriebeeinheit eine separate Lagerung. Im Unterschied zur zusätzlichen Lagerung bei konventionellen Hebelaktoren werden hierbei die an der Getriebeeinheit in axialer Richtung zur Motorachse auftretenden Zug- und Druckkräfte bereits über den Motor abgestützt durch Änderung der Größe der Motorlager bzw. dessen Aufhängung am Gehäuse.

Allerdings führt die jeweils separate Lagerung von Motoreinheit und Getriebeeinheit zu einer statischen Überbestimmtheit der Lagerung des Gesamtmoduls, was eine erhöhte Bauteilbeanspruchung zur Folge hat. Das Dokument WO 2006/114265 A1 betrifft einen Aktuator aufweisend einen Motor und ein translatorisch oder rotatorisch wirkendes Abtriebsteil, das an ein Stellelement angeschlossen ist. Der Aktuator wird in Kraftfahrzeugen im Fahrwerk eingesetzt, beispielsweise zur Verstellung des aufbauseitigen Stellelementes eines Radführungsgliedes.

Daher ist es Aufgabe der Erfindung, die Lagerung dieses Motor-Getriebemoduls derart zu verbessern, dass diese kostengünstig und nicht überbestimmt ist.

Diese Aufgabe wird mit den Merkmalen des Anspruchs 1 gelöst. Vorteilhafte Weiterbildungen ergeben sich aus den Unteransprüchen.

Die Erfindung wird nachfolgend anhand eines Ausführungsbeispiels mit zugehörigen Zeichnungen näher erläutert.

Es zeigen:
- Figur 1: einen Schnitt einer Prinzipdarstellung eines erfindungsgemäßen Motor-Getriebemoduls,
- Figur 2: eine weitere Ansicht des Motor-Getriebemoduls gemäß Figur 1.

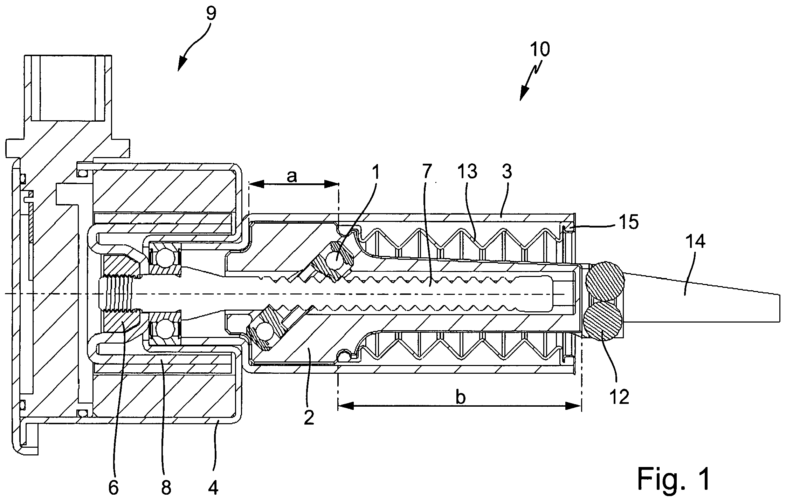

Figur 1 zeigt eine Prinzipdarstellung einer Motoreinheit 9 und einer Getriebeeinheit 10, die ein erfindungsgemäßes Motor-Getriebemodul bilden. Die Motoreinheit 9 wird im Wesentlichen von einem Elektromotor gebildet, der von einem nach innen gezogenen topfförmigen Gehäuse 4 umhüllt wird, wobei sie außerdem über eine entsprechende Elektronik verfügt. Das Gehäuse 4 umhüllt somit auch den Rotor 8 des Motors. Die sonst übliche Motorwelle fungiert bekanntermaßen in diesem Falle gleichzeitig als Spindelwelle für den anschließenden Gewindetrieb und wird daher als Motorgetriebewelle 7 bezeichnet. Diese Motorgetriebewelle 7 ist mit dem Rotor 8 des Motors verbunden. Die Lagerung der Motorgetriebewelle 7 in axialer und radialer Richtung erfolgt über ein im Motor angeordnetes Festlager 5, dessen Lagerschalen einerseits mit dem Motorgehäuse 4 und andererseits auf dem Bund der Motorgetriebewelle 7 verpresst sind. Für dieses Festlager 5 kann ein kostengünstiges Standardlager verwendet werden, wie beispielsweise ein Rillenkugellager, ein Vierpunktlager oder ein Schrägkugellager, das ein- oder zweireihig ausgeführt sein kann. Der Rotor 8 ist zwischen einem Bund an der Motorgetriebewelle 7 und einer auf dieser angeordneten Gewindemutter 6 reibschlüssig verklemmt, die beispielsweise über ihre entsprechend ausgeführte Mantelfläche relativ zur Motorgetriebewelle verdrehgesichert ist. Die Motorgetriebewelle 7, die, wie oben ausgeführt, einen Teil des Gewindetriebes bildet, ist für diese Funktion entsprechend ausgebildet und mit einem schräg gestellten Lager 1 versehen. Über die Motorgetriebewelle 7 ist der Motor bzw. ein Teil des Gewindetriebes mit der Getriebeeinheit 10 verbunden. Diese besteht im Wesentlichen aus dem Gewindetrieb mit einem zweiteiligen Getriebegehäuse 2, das im Innern eine Grundbohrung aufweist, in die die Motorgetriebewelle 7 mit einem schräg gestellten Lager, das auch als Spindellager 1 bezeichnet wird, eintaucht. Am Ende des Getriebegehäuses 2 ist eine Rolleneinheit 12 befestigt. In die beiden Schalen des Getriebegehäuses 2 ist die Laufbahn für die äußere Lagerschale des Spindellagers 1 eingearbeitet. Die Laufbahn für die innere Lagerschale des Spindellagers 1 ist dabei direkt in die Motorgetriebewelle 7 eingearbeitet. Die äußere Form des Getriebegehäuses 2 ist stufenartig ausgeführt, so dass dessen Gesamtlänge in axialer Richtung in zwei Teilbereiche a und b unterteilt wird, deren Mantelflächen unterschiedliche Querschnittsformen aufweisen können. In diesem Beispiel ist der Teilbereich a zylindrisch ausgebildet und weist einen Durchmesser auf, der an den Innendurchmesser eines das Getriebegehäuse 2 radial umhüllenden Führungsrohres 3 angepasst ist. Somit fungiert die Mantelfläche im Teilbereich a des Getriebegehäuses 2 als Gleitfläche. Die Grundform des Querschnitts des Teilbereiches b ist ebenfalls zylindrisch ausgebildet. Allerdings ist dieser Teilbereich b über seine Gesamtlänge mit zwei zur Zylinderachse parallel verlaufenden Flächen versehen, so dass die Mantelfläche im Querschnitt abwechselnd in zylindrische und gerade Abschnitte aufgeteilt ist. Diese Planflächen dienen zur An- bzw. Auflage eines nicht dargestellten Hebelsystems zur Kupplungsbetätigung.

Das in Richtung Rolleneinheit 12 zeigende Ende des Führungsrohres 3 weist einen nach innen gerichteten Bund 15 auf. In diesem Bund 15 wird das eine Ende eines Faltenbalges 13 eingeclipst, während dessen anderes Ende im Umfang des Getriebegehäuses 2 formschlüssig aufgenommen wird. Dieser Faltenbalg 13 dient dazu, äußeren Schmutz von beiden Lagern 1, 5 fernzuhalten. Außerdem wird durch diesen verhindert, dass Schmierstoff vom Gewindetrieb sich zwischen Faltenbalg 13 und Führungsrohr 3 ansammeln kann, was in beiden Fällen ohne diesen Faltenbalg 13 zur Beeinträchtigung der Funktion der Getriebeeinheit 10 führen würde. Allerdings wäre auch anstelle eines Faltenbalges 13 ein die kreisringförmigen Stirnflächen von Getriebeeinheit 10 und Führungsrohr abdeckender Verschluss in Form eines Deckels denkbar, der im Bereich der Durchführung des Getriebegehäuses 2 mit einer auf dessen Außenkontor abgestimmter Abstreiflippe versehen ist. Diese Getriebeeinheit 10 wird mittels des diese umhüllenden Führungsrohres 3 an seinem motorseitigen Ende kraftschlüssig mit dem Motorgehäuse 4 verbunden. Diese kraftschlüssige Verbindung kann beispielsweise mittels Kleben, Schweißen, Verstemmen oder ähnlichem ausgeführt werden.

Bei der Bestromung des Motors wird die Rotationsbewegung des Rotors 8 auf die mit diesem kraftschlüssig verbundene Motorgetriebewelle 7 übertragen. Durch Reibschluss wird dabei die innere Lagerschale des Spindellagers 1 ebenfalls in eine Drehbewegung versetzt, die dazu führt, dass das Getriebegehäuse 2 eine axiale Bewegung ausführt. Je nach Bestromungsrichtung wird somit das Getriebegehäuse 2 aus dem Führungsrohr 3 heraus oder in dieses hinein bewegt, wobei es über seine Gleitfläche im Teilbereich a im Führungsrohr 3 eine Führung erhält. Das Führungsrohr 3 weist im Bereich der Rolleneinheit 12 seitliche Verlängerungen auf, die als Führungsflächen 14 für die Rolleneinheit während der Bewegung des Getriebegehäuses 2 fungieren. Diese axiale Bewegung des Getriebegehäuses 2 wird begrenzt durch zwei Anschläge, die motorseitig dadurch gebildet werden, dass das Getriebegehäuse 2 an die als Stufe ausgebildete Innenkontur des Führungsrohres 3 anschlägt und in Richtung Rolleneinheit 12 an dessen Bund 15 anschlägt, wobei in dieser Stellung zwischen diesem und dem Getriebegehäuse 2 der Faltenbalg 13 zusammengedrückt wird. Demnach schlägt das Getriebegehäuse 2 zusammen mit dem Faltenbalg 13 am Bund 15 des Führungsrohres 3 an.

Aus dieser Figur 1 geht hervor, dass die Lagerung des Motor-Getriebemoduls einerseits an der Verbindungsstelle beider Einheiten 9, 10 über das Festlager 5 und andererseits über die Rolleneinheit 12 realisiert wird. Die Motorgetriebewelle 7 wird einerseits axial im Motor aufgenommen. Aufgrund der Drehbewegung des Gewindetriebes verändert sich der Ort ihrer radialen Abstützung, die die zweite Lagerstelle darstellt. In dieser Figur wird dies über das Spindellager 1 im Getriebegehäuse 2 realisiert, das sich wiederum am Führungsrohr 3 abstützt, wobei durch das schräg gestellte Lager 1 auch eine axiale Lagerkomponente zum Tragen kommt.

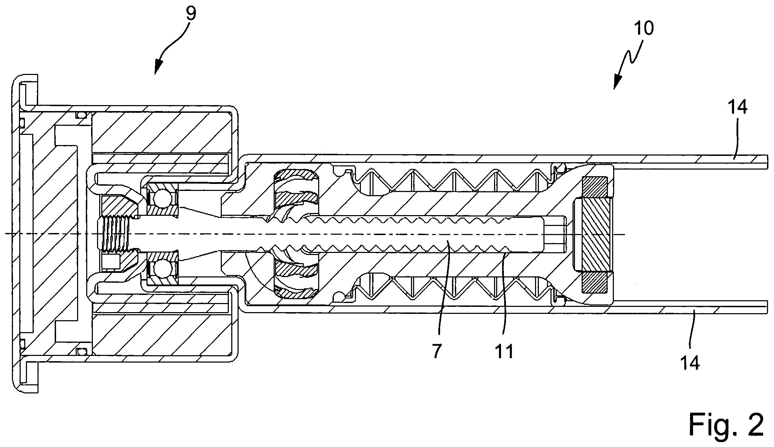

Figur 2 zeigt den prinzipiellen Aufbau des Motor-Getriebemoduls in einer anderen Schnittdarstellung. Aus dieser Figur 2 ist wiederum die Verbindung von Motoreinheit 9 und Getriebeeinheit 10 über die Motorgetriebewelle 7 erkennbar. Aus dieser Schnittdarstellung ist eine weitere mögliche Art der Lagerung erkennbar. Der Ort der Lagerung befindet sich hierbei im Endbereich der Motorgetriebewelle 7 und wird durch eine seitliche Abstützung 11 am Getriebegehäuse 2 hergestellt. Somit stützt sich die Motorgetriebewelle 7 während ihrer Drehbewegung radial abwechselnd über das Spindellager 1 am Getriebegehäuse 2 und im Endbereich am Getriebegehäuse 2 ab.

### Bezugszeichenliste

- 1: Schräg gestelltes Lager / Spindellager
- 2: Getriebegehäuse
- 3: Führungsrohr
- 4: Motorgehäuse
- 5: Motorlager
- 6: Gewindemutter
- 7: Motorgetriebewelle
- 8: Rotor
- 9: Antriebseinheit
- 10: Getriebeeinheit
- 11: Seitliche Abstützung
- 12: Rolleneinheit
- 13: Faltenbalg
- 14: Führungsfläche
- 15: Bund

- a: Teilbereich
- b: Teilbereich

## Patentansprüche

1. Motor-Getriebemodul zum Antrieb eines Hebelsystems zur Kupplungsbetätigung mit einer Motoreinheit (9) und einer Getriebeeinheit (10), die über eine in die Getriebeeinheit (10) in axialer Richtung eindringende Motorgetriebewelle (7) miteinander verbunden sind, wobei an der Getriebeeinheit (10) eine Rolleneinheit (12) angeordnet ist, und wobei die Lagerung der bewegbaren Teile des Motor-Getriebemoduls einerseits an der Verbindungsstelle von Motoreinheit (9) und Getriebeeinheit (10) und andererseits mittels der Rolleneinheit (12) erfolgt, **gekennzeichnet dadurch, dass** ein bewegbarer Teil der Verbindungsstelle durch einen Rotor (8) des Elektromotors der Motoreinheit (9) realisiert ist, und dass die Getriebeeinheit (10) aus einem Gewindetrieb, bestehend aus der Motorgetriebewelle (7) und einem Spindellager (1), und einem zweiteiligen Gehäuse (2) gebildet ist, und am Ende des Getriebegehäuses (2) die Rolleneinheit (12) befestigt ist.

2. Motor-Getriebemodul nach Anspruch 1, **dadurch gekennzeichnet, dass** das Getriebegehäuse (2) radial von einem Führungsrohr (3) umhüllt ist.

3. Motor-Getriebemodul nach Anspruch 2, **dadurch gekennzeichnet, dass** das Führungsrohr (3) im Bereich der Rolleneinheit (12) seitliche Verlängerungen (14) aufweist.

4. Motor-Getriebemodul nach Anspruch 1, **dadurch gekennzeichnet, dass** der weitere bewegbare Teil in der Verbindungsstelle von der Motorgetriebewelle (7) der Getriebeeinheit (10) gebildet ist.

5. Motor-Getriebemodul nach Anspruch 2 oder 3, **dadurch gekennzeichnet, dass** das Führungsrohr (3) motorseitig mit dem Motorgehäuse (4) kraftschlüssig verbunden und endseitig mit einem nach innen weisenden Bund (15) versehen ist.

6. Motor-Getriebemodul nach einem der vorangehenden Ansprüche, **dadurch gekennzeichnet, dass** das Spindellager (1) als schräg gestelltes Kugellager ausgebildet ist.

7. Motor-Getriebemodul nach Anspruch 1, **dadurch gekennzeichnet, dass** die Lagerung an der Verbindungsstelle durch ein Festlager (5) realisiert ist.

8. Motor-Getriebemodul nach einem der vorangehenden Ansprüchen, **dadurch gekennzeichnet, dass** die Motorgetriebewelle (7) direkt am Getriebegehäuse (2) abgestützt ist.

9. Motor-Getriebemodul nach einem der vorangehenden Ansprüche, **dadurch gekennzeichnet, dass** die Motorgetriebewelle (7) mittels eines zusätzlichen Gleitelements am Getriebegehäuse (2) abgestützt ist.

10. Motor-Getriebemodul nach Anspruch 2, **dadurch gekennzeichnet, dass** sich das Spindellager (1) über das Getriebegehäuse (2) am Führungsrohr (3) abstützt.

11. Motor-Getriebemodul nach Anspruch 3, **dadurch gekennzeichnet, dass** das Führungsrohr (3) motorgehäusefest angeordnet ist.

12. Motor-Getriebemodul nacheinem der vorangehenden Ansprüche, **dadurch gekennzeichnet, dass** der Rotor (8) zwischen der Motorgetriebewelle (7) und einer Gewindemutter (6) reibschlüssig verbunden ist.

13. Motor-Getriebemodul nach Anspruch 12, **dadurch gekennzeichnet, dass** der Rotor (8) zwischen Motorgetriebewelle (7) und Gewindemutter (6) mindestens über eine am Umfang der Motorgetriebewelle (7) angeordnete Auflagestelle reibschlüssig verbunden ist.

14. Motor-Getriebemodul nach Anspruch 12 oder 13, **dadurch gekennzeichnet, dass** die Gewindemutter (6) gegen Verdrehen relativ zur Motorgetriebewelle (7) gesichert ist.

## Claims

1. Motor/gearbox module for driving a lever system for clutch actuation having a motor unit (9) and a gearbox unit (10) which are connected to one another via a motor/gearbox shaft (7) which penetrates into the gearbox unit (10) in the axial direction, a roller unit (12) being arranged on the gearbox unit (10), and the mounting of the movable parts of the motor/gearbox module taking place firstly at the connecting point of the motor unit (9) and the gearbox unit (10) and secondly by means of the roller unit (12), **characterized in that** a movable part of the connecting point is realized by way of a rotor (8) of the electric motor of the motor unit (9), and **in that** the gearbox unit (10) is formed from a screw drive, consisting of the motor/gearbox shaft (7) and a spindle bearing (1), and from a two-piece housing (2), and the roller unit (12) is fastened to the end of the gearbox housing (2).

2. Motor/gearbox module according to Claim 1, **characterized in that** the gearbox housing (2) is encased radially by a guide tube (3).

3. Motor/gearbox module according to Claim 2, **characterized in that** the guide tube (3) has lateral extensions (14) in the region of the roller unit (12).

4. Motor/gearbox module according to Claim 1, **characterized in that** the further movable part in the connecting point is formed by the motor/gearbox shaft (7) of the gearbox unit (10).

5. Motor/gearbox module according to Claim 2 or 3, **characterized in that** the guide tube (3) is connected on the motor side to the motor housing (4) in a non-positive manner and is provided on the end side with an inwardly pointing flange (15).

6. Motor/gearbox module according to one of the preceding claims, **characterized in that** the spindle bearing (1) is configured as an obliquely positioned ball bearing.

7. Motor/gearbox module according to Claim 1, **characterized in that** the mounting at the connecting point is realized by way of a locating bearing (5).

8. Motor/gearbox module according to one of the preceding claims, **characterized in that** the motor/gearbox shaft (7) is supported directly on the gearbox housing (2).

9. Motor/gearbox module according to one of the preceding claims, **characterized in that** the motor/gearbox shaft (7) is supported on the gearbox housing (2) by means of an additional sliding element.

10. Motor/gearbox module according to Claim 2, **characterized in that** the spindle bearing (1) is supported on the guide tube (3) via the gearbox housing (2).

11. Motor/gearbox module according to Claim 3, **characterized in that** the guide tube (3) is arranged fixedly on the motor housing.

12. Motor/gearbox module according to one of the preceding claims, **characterized in that** the rotor (8) is connected in a frictionally locking manner between the motor/gearbox shaft (7) and a threaded nut (6).

13. Motor/gearbox module according to Claim 12, **characterized in that** the rotor (8) is connected in a frictionally locking manner between the motor/gearbox shaft (7) and the threaded nut (6) at least via a supporting point which is arranged on the circumference of the motor/gearbox shaft (7).

14. Motor/gearbox module according to Claim 12 or 13, **characterized in that** the threaded nut (6) is secured against rotation relative to the motor/gearbox shaft (7).

## Revendications

1. Module de moteur-transmission destiné à entraîner un système de levier d'actionnement d'un embrayage, présentant une unité de moteur (9) et une unité de transmission (10) reliées l'une à l'autre par l'intermédiaire d'un arbre (7) de moteur-transmission qui engage l'unité de transmission (10) dans la direction axiale, une unité de roulement (12) étant disposée sur l'unité de transmission (10) et le montage des parties mobiles du module moteur-transmission s'effectuant d'une part à l'emplacement de liaison entre l'unité de moteur (9) et l'unité de transmission (10) et d'autre part au moyen de l'unité de roulement (12),
**caractérisé en ce que**
une partie mobile de l'emplacement de liaison est réalisée par un rotor (8) du moteur électrique de l'unité de moteur (9),
**en ce que** l'unité de transmission (10) est formée d'une transmission filetée constituée de l'arbre (7) de moteur-transmission et d'un palier à aiguilles (1) ainsi que d'un boîtier (2) en deux parties et
**en ce que** l'unité de roulement (12) est fixée à l'extrémité du boîtier de transmission (2).

2. Module de moteur-transmission selon la revendication 1, **caractérisé en ce que** le boîtier de transmission (2) est entouré radialement par un tube de guidage (3).

3. Module de moteur-transmission selon la revendication 2, **caractérisé en ce que** le tube de guidage (3) présente des prolongements latéraux (14) au niveau de l'unité de roulement (12).

4. Module de moteur-transmission selon la revendication 1, **caractérisé en ce que** l'autre partie mobile est formée dans l'emplacement de liaison entre l'arbre (7) de moteur-transmission de l'unité de transmission (10).

5. Module de moteur-transmission selon les revendications 2 ou 3, **caractérisé en ce que** le tube de guidage (3) est relié en correspondance mécanique au boîtier de moteur (4) côté moteur et est doté à son extrémité d'un collet (15) orienté vers l'intérieur.

6. Module de moteur-transmission selon l'une des revendications précédentes, **caractérisé en ce que** le palier à aiguilles (1) est configuré comme palier à billes posé obliquement.

7. Module de moteur-transmission selon la revendication 1, **caractérisé en ce que** le montage à l'emplacement de liaison est réalisé par un palier fixe (5).

8. Module de moteur-transmission selon l'une des revendications précédentes, **caractérisé en ce que** l'arbre (7) de moteur-transmission est soutenu directement sur le boîtier (2) de la transmission.

9. Module de moteur-transmission selon l'une des revendications précédentes, **caractérisé en ce que** l'arbre moteur-transmission (7) est soutenu sur le boîtier de transmission (2) au moyen d'un élément coulissant supplémentaire.

10. Module de moteur-transmission selon la revendication 2, **caractérisé en ce que** le palier à aiguille (1) s'appuie sur le tube de guidage (3) par l'intermédiaire du boîtier de transmission (2).

11. Module de moteur-transmission selon la revendication 3, **caractérisé en ce que** le tube de guidage (3) est disposé fixement sur le boîtier du moteur.

12. Module de moteur-transmission selon l'une des revendications précédentes, **caractérisé en ce que** le rotor (8) est relier par frottement entre l'arbre (7) de moteur-transmission et un écrou fileté (6).

13. Module de moteur-transmission selon la revendication 12, **caractérisé en ce que** le rotor (8) est relié entre l'arbre (7) de moteur-transmission et l'écrou fileté (6) par frottement au moins par l'intermédiaire d'un emplacement de pose disposé à la périphérie de l'arbre (7) de moteur-transmission.

14. Module de moteur-transmission selon les revendications 12 ou 13, **caractérisé en ce que** l'écrou fileté (6) est empêché de tourner par rapport à l'arbre (7) de moteur-transmission.
